# EUROPÄISCHE PATENTSCHRIFT

(11) **EP 0 768 386 B1**
(45) Veröffentlichungstag und Bekanntmachung des Hinweises auf die Patenterteilung: **30.06.1999**
(21) Anmeldenummer: 96115520.7
(22) Anmeldetag: 27.09.1996
(51) Int. Cl.: C21B 5/00, C21C 5/28

(54) **Verfahren zur Senkung des Schmelzpunktes der Restasche von Kohle**
Method for lowering the melting point of the residual ash of coal
Procédé pour réduire le point de fusion de la cendre résiduelle de charbon

(30) Priorität: 12.10.1995 DE 19538162
(43) Veröffentlichungstag der Anmeldung: 16.04.1997
(73) Patentinhaber: METALLGESELLSCHAFT AG, 60323 Frankfurt am Main (DE); G S R - Gesellschaft für synthetische Rohstoffe, 47441 Moers (DE)
(72) Erfinder: Amirzadeh-Asl, Djamschid, Dr., 47445 Moers (DE); Fünders, Dieter, Dr., 47441 Moers (DE)
(74) Vertreter: Revesz, Veronika

(56) Entgegenhaltungen:
- DE-A- 4 104 072
- DE-C- 4 304 724
- DE-C- 4 419 816
- DE-C- 4 437 548
- PATENT ABSTRACTS OF JAPAN vol. 012, no. 491 (C-554), 21.Dezember 1988 & JP-A-63 203707 (SUMITOMO METAL IND LTD), 23.August 1988,
- PATENT ABSTRACTS OF JAPAN vol. 014, no. 492 (C-0773), 26.Oktober 1990 & JP-A-02 205609 (NISSHIN STEEL CO LTD), 15.August 1990,

## Beschreibung

Die vorliegende Erfindung bezieht sich auf ein Verfahren zum Einbringen einer Pulvermischung in ein metallurgisches Gefäß oder Ofen, bestehend aus Kohle einer Korngröße von < 3 mm, vorzugsweise 20 bis 500 µm, und einem Restaschegehalt von 8 bis 60 Gew.% sowie 2 bis 50 Gew.% titan- und titanoxidhaltigen Rückständen einer Korngröße von 0,2 bis 1000 µm und eisen- und eisenoxidhaltigen Rückständen einer Korngröße von 1 bis 3000 µm.

In metallurgischen Prozessen werden kohlenstoffhaltige Stoffe, wie Kohle und Koks, als Energieträger und als metallurgisches Reduktionsmittel eingesetzt. Im folgenden werden diese kohlenstoffhaltigen Stoffe mit dem Begriff "Kohle" bezeichnet. Diese Kohle ist mit einem bestimmten Anteil an Restasche behaftet. Um die Restasche aufzuschmelzen, wird zusätzlich Energie verbraucht, was dazu führt, daß deren Schmelze sehr zähflüssig ist. Daher ist die Restasche aus verfahrenstechnischer und wirtschaftlicher Sicht nachteilig. Darüber hinaus stört die Restasche thermodynamische Prozesse und verschlechtert die Reaktionskinetik der metallurgischen Prozesse.

In einem Hochofen wird zum Beispiel durch die relativ hohe Zähigkeit der geschmolzenen Restasche ein Verstopfen der Strömungskanäle der Prozeßgase in den eingebrachten Kohlestücken und Erzkörpern sowie in den Freiräumen zwischen dem eingebrachten Gut begünstigt. Auch der Transport der eingeblasenen Kohle wird durch die Restasche, die sich um die Einblasstelle im Brennraum niederschlägt und die offenen Kanäle und Poren verstopft, behindert.

Auch bei der Stahlherstellung ist der Gehalt an Restasche in der verwendeten Kohle sowohl im Bereich der Primärmetallurgie als auch im Bereich der Sekundärmetallurgie nachteilig. Beim Konverterverfahren ist der Nachteil der Restasche vor allem darin zu sehen, daß ein großer Teil der zusätzlich einzubringenden Energie der Kohle zum Aufschmelzen der Restasche verbraucht wird. Im Elektroofen wird feinteilige Kohle darüber hinaus zum Schäumen der Schlacke in die Schmelze bzw. an der Grenzfläche Stahl/Schlacke in des Schmelzgefäß eingeblasen. Durch diese Maßnahme sollen unter anderem die Elektroden und die Ofenwände vor der hohen Temperaturbelastung geschützt werden. Besitzt die eingeblasene Kohle einen hohen Anteil an Restasche, wird die Schlacke zähflüssig und der Schäumeffekt wird vermindert. Im Bereich der Sekundärmetallurgie wird durch den Anteil an Restasche die Thermodynamik und Kinetik der Prozesse gestört. Bei der geforderten hohen Qualität und speziellen Zusammensetzung heutiger Stahlsorten können nur hochwertige, schlackearme und damit teure Kohlesorten verwendet werden.

Zum Einblasen in der Eisen-, Stahl-, und Gießereiindustrie wird eine feinteilige Kohle mit einer Partikelgröße von 40 µm bis 3 mm verwendet. Die Restasche dieser Kohle hat beispielsweise folgende Zusammensetzung:
40 bis 50 Gew.-% SiO₂,
20 bis 30 Gew.-% Al₂O₃,
10 bis 15 Gew.-% Fe₂O₃ und
bis 1 Gew.-% TiO₂.

Die eingeblasene Kohle hat einen Anteil an Restasche von 5 bis 30 Gew.-%. Die Verwendung von höherwertigeren Kohlesorten mit einem geringeren Gehalt an Restasche ist für einen derartigen Einsatz unwirtschaftlich.

Aus der DE 43 04 724 C1 ist eine titanhaltiger Zuschlagsstoff aus Rückständen der TiO₂-Herstellung und einem oder mehreren Bestandteilen, ausgewählt aus Kohle, kohlehaltigen Rückständen, Eisen, Eisenoxid, eisen- oder eisenoxidhaltigen Rückständen, bekannt geworden. Dieser Zuschlagsstoff dient dazu, den natürlichen llmenit als Zuschlagsstoff zu ersetzen und die Haltbarkeit der feuerfesten Ausmauerung eines Ofens zu erhöhen. Der Zuschlagsstoff wird insbesondere in Form stückiger Formkörper oder eines Pulvergemisches dem Ausgangsmaterial zugesetzt.

Es ist die Aufgabe der vorliegenden Erfindung, das eingangs beschriebene Verfahren so zu gestalten, daß eine Senkung des Schmelzpunkts der Restasche der Kohle erzielt wird.

Diese Aufgabe wird erfindungsgemäß gelöst, indem bei dem eingangs genannten Verfahren die Pulvermischung unmittelbar in den Reaktionsraum des metallurgischen Gefäßes oder Ofens eingeblasen wird.

Die feinteiligen Rückstände können zum Beispiel in Pulverform der Kohle beigemischt oder in Form einer Suspension auf die Oberfläche der Kohle gesprüht werden. Die Mischung der Kohle mit den Rückständen kann zum Beispiel mit Hilfe eines Freifallmischers oder Zwangsmischers erfolgen. Zwangsmischer, zum Beispiel Pflugschaufel-Mischer (Ullmanns Encyklopädie der technischen Chemie, 3. Auflage, 1951, 1. Band "Chemischer Apparatebau und Verfahrenstechnik, Seite 713-717) haben sich als besonders geeignet erwiesen. Im übrigen sind auch Zerkleinerungsmaschinen, beispielsweise Schwingmühlen oder Kugelmühlen, für das Mischen dieser Stoffe gut geeignet. Eine für die jeweilige verwendete Kohle und den eingesetzten Mischer geeignete Mischdauer kann durch wenige, einfache Versuche ermittelt werden; sie beträgt beispielsweise 1 bis 10 min. in einem Pflugschaufel-Mischer. Die homogene Mischung wird über eine dem jeweiligen Einsatzzweck angepaßte Einblasanlage nach dem Stand der Technik in den Ofen eingeblasen. Es hat sich gezeigt, daß durch die erfindungsgemäße Mischung eine relativ große Energieeinsparung beim Schmelzprozeß in einem Ofen möglich ist. Allgemein ergibt sich eine Beschleunigung von metallurgischen Prozessen. Die Viskosität der aufgeschmolzenen Restasche wird durch die erfindungsgemäße Mischung reduziert und die Reaktionskinetik der Schlackenbildung verbessert. In Abhängigkeit von der Zusammensetzung der eingeblasenen, feinteiligen Kohle können Schmelzpunkterniedrigungen der Restasche bis über 150 °C erreicht werden. Die Schmelzpunkterniedrigung erfolgt sowohl im Gasraum der Verbrennung direkt im Bereich der Einblasdüse, als auch auf den groben Stücken des in den Ofen eingebrachten Gutes, auf die die feinen Teilchen der Kohle beim Einblasen auftreffen und auf denen sie sich ablagern. Durch die relativ niedrigere Viskosität der aufgeschmolzenen Restasche wird die Neigung zur Verstopfung der Mikro- und Makroporen des in den Ofen eingebrachten Gutes, beispielsweise in der Möller-Säule des Hochofens, deutlich verringert. Dadurch kann die Einblasrate für die Kohle erhöht werden. Auch ein stärkeres Einbringung von eisenhaltigem Gut, beispielweise Schrott, in den Ofen wird darüber hinaus ermöglicht. Die zuvor genannten Vorteile führen insgesamt zu einer Verbesserung der Wirtschaftlichkeit von metallurgischen Prozessen in einem Ofen und dienen darüber hinaus durch die Verwertung von industriellen Rückständen einer Verbesserung der Umweltverträglichkeit dieser Verfahren.

Die Korngröße der Kohle bezieht sich auf einen Anteil größer 90 Gew.-%. Diese Angabe schließt nicht aus, daß ein relativ geringer Anteil an Partikeln mit einer kleineren Partikelgröße enthalten sein kann. Um diese Partikelgröße zu erzielen, wird grobkörnige, handelsübliche Kohle in Mahlanlagen gemahlen und anschließend getrocknet. Die Zugabe des feinteiligen Rückstands kann vor dem Mahlen oder vor dem Trocknen der Kohle erfolgen. Als Mahlanlage kann zum Beispiel eine Kugelmühle oder Schlagmühle verwendet werden. Die Trocknung kann beispielseise in einem Drehrohrofen erfolgen. Es hat sich als besonders vorteilhaft erwiesen, Kohle mit einer Partikelgröße von < 500 µm zu verwenden, da eine beträchtliche Erniedrigung des Schmelzpunkts und der Viskosität der geschmolzenen Restasche damit erreicht wird.

Die titanhaltigen oder titanoxidhaltigen Rückstände weisen einen Titan- oder Titandioxid-Gehalt von 5 bis 80 Gew.-% auf. Die Angabe der Partikelgröße schließt nicht aus, daß ein relativ geringer Anteil an Partikeln mit einer kleineren Partikelgröße enthalten sein kann. Diese Titan- und Titandioxid-Gehalte führen zu einer sehr starken Erniedrigung des Schmelzpunkts der Restasche und Viskositätserniedrigung der geschmolzenen Restasche. Des weiteren ergibt sich die Möglichkeit, eine Vorlegierung sowohl in der Roheisenphase als auch in der Stahlphase mit Titan vorzunehmen. Darüber hinaus wird durch das Einbringen von Titandioxid die Haltbarkeit von Ofenausmauerungen erhöht.

In Ausgestaltung der Erfindung kann vorgesehen sein, daß die eisenhaltigen oder eisenoxidhaltigen Rückstände einen Eisen- und Eisenoxid-Gehalt von 30 bis 90 Gew.-% aufweisen. Die Angabe der Partikelgröße schließt nicht aus, daß ein relativ geringer Anteil an Partikeln mit einer kleineren Partikelgröße enthalten sein kann. In vielen Bereichen der Eisen- und Stahlherstellung fallen eisen- oder eisenoxidhaltige Rückstände an. Zum Beispiel können eisenhaltige bzw. eisenoxidhaltige Rückstände verwendet werden, die in Form von Abbränden, Walzzunder, Stäuben, Filterschlämmen oder Filterkuchen anfallen. Unter Abbrand ist beispielsweise der Rückstand zu verstehen, der durch eine Spaltung von Schwefelkies oder Eisensulfat bei der Herstellung von Schwefelsäure anfällt. Dieser Abbrand enthält ca. 30 bis 60 Gew.-% an Eisen. Walzzunder fällt zum Beispiel als Oxidationsschicht beim Walzen und Schmieden von Stahl sowie beim Drahtziehen an. Schließlich fällt bei der Produktion von Eisenoxid zur Herstellung von Farbpigmenten ein eisenhaltiger bzw. eisenoxidhaltiger Rückstand an. Die Verwendung eines eisen- oder eisenoxidhaltigen Rückstands hat den Vorteil, daß dieser eine sehr starke Erniedrigung des Schmelzpunkts der Restasche und Viskosität der geschmolzenen Restasche bewirkt. In Ausgestaltung der Erfindung kann im weiterer vorgesehen sein, daß die Rückstände in Form einer Suspension mit einem Feststoffgehalt von 500 bis 800 g/l auf die Kohle gesprüht werden. Durch dieses vergleichsweise technisch einfache und kostengünstige Verfahren können die Rückstände relativ homogen auf die Oberfläche der Kohle aufgetragen werden. Nach anschließender Trocknung erhält man ein Produkt, das sich für das Einblasen in den Ofen sehr gut eignet. Aufgrund der Feinheit der Partikel und der damit verbundenen großen spezifischen Oberfläche haften die unterschiedlichen Partikel relativ fest zusammen, so daß nur eine sehr geringe Trennung des Gemisches auftritt. Über die große gemeinsame Kontaktfläche findet die erforderliche Festkörperreaktion statt, die zu einer besonders starken Herabsetzung des Schmelzpunkts der Restasche und zu einer starken Viskositätserniedrigung führt.

Zweckmäßig können der Kohle Rückstände aus der Titandioxid-Herstellung zugemischt werden. Bei der Herstellung von Titandioxid, insbesondere Titandioxid-Pigment, werden titanhaltige Rohstoffe wie llmenit und Schlacke oder ein Gemisch aus llmenit und Schlacke ausgelaugt, wobei Titanylsulfat gewonnen wird. Dies geschieht beispielsweise mit Schwefelsäure nach dem Sulfat-Verfahren. Der dabei gebildete unlösliche Rückstand wird über einen Eindicker und ein Filter abgetrennt und anschließend deponiert. Dieser Rückstand enthält noch 20 bis 65 Gew.-% Titandioxid, wobei auch durch eine erneute Auslaugung dieses Rückstands Titandioxid noch in erheblichen Mengen darin vorhanden ist. Gemäß der Erfindung kann aber auch der Rückstand aus anderen Verfahren zur Herstellung von Titandioxid, wie zum Beispiel dem Chloridverfahren, in vorteilhafter Weise verwendet werden. Durch Zumischung des Rückstands aus der Herstellung von Titandioxid wird der Schmelzpunkt der Restasche sehr stark reduziert und die Viskosität der Schmelze deutlich gemindert. In Abhängigkeit vom Anteil an Rückstand aus der Herstellung von Titandioxid kann eine Senkung der Schmelztemperatur bis ca. 150°C erreicht werden. Ein bedeutender Vorteil der Verwendung eines derartigen Rückstands liegt außerdem darin, daß dieser in einer sehr hohen Feinheit vorliegt. Eine sehr hohe Feinheit bedeutet hier eine Partikelgröße von 1 bis 100 µm, wobei ein relativ geringer Anteil an Partikeln mit einer kleineren Partikelgröße enthalten sein kann. Daher kann dieser besonders feinteilige Rückstand der Kohle sehr homogen zugemischt werden und der Ablauf der Festkörperreaktion auf der Oberfläche der Kohle kann gut stattfinden. In Ausgestaltung der Erfindung ist es möglich, daß der Anteil an feinteiligem Rückstand aus der Herstellung von Titandioxid aus 5 bis 65 Gew.-%, vorzugsweise 20 bis 65 Gew.% Titandioxid besteht.

Die Erfindung wird anhand mehrerer Ausführungsbeispiele näher erläutert.

### Beispiel 1:

Ein Anteil von 80 Gew.-% Kohle mit einer Partikelgröße von 40 bis 80 µm, mit einem Anteil an Restasche von 11 Gew.-% und folgender Ascheanalyse:

| | |
|---|---|
| 46 | Gew.% SiO₂, |
| 25 | Gew.-% Al₂O₃, |
| 12 | Gew.-% Fe₂O₃, |
| 4 | Gew.-% CaO, |
| 3 | Gew.-% MgO, |
| 1 | Gew.-% TiO₂ und |
| 0,5 | Gew.-% K₂O und Na₂O |

wurde in einem Pflugschaufelmischer vorgelegt. Bei laufendem Mischer wurden 20 Gew.-% von einer Suspension eines Rückstands aus der Herstellung von TiO₂-Pigment auf die Kohle gesprüht. Diese Suspension fiel beim Aufschluß nach dem Sulfatverfahren an und enthielt:

| | |
|---|---|
| 51,5 | Gew.-% TiO₂, |
| 3,1 | Gew.-% Fe₂O₃, |
| 21 | Gew.-% SiO₂, |
| 6 | Gew.-% CaO und |
| 5 | Gew.-% Al₂O₃. |

Die Suspension des Aufschlußrückstands hatte einen Feststoffgehalt von 49 % (710 g/l Feststoff) und eine Partikelgröße von 95 % kleiner 100 µm. Nach einer Mischdauer von 3 min. wurde die Mischung getrocknet. Die Asche dieser Mischung enthielt:

| | |
|---|---|
| 48,2 | Gew.-% SiO₂, |
| 25,5 | Gew.-% Al₂O₃, |
| 12,5 | Gew.-% Fe₂O₃, |
| 5,8 | Gew.-% TiO₂, |
| 4,5 | Gew.-% CaO und |
| 3,4 | Gew.-% MgO. |

Bei dieser Mischung hatte die Asche einen Schmelzpunkt von 1350°C, während der Schmelzpunkt der Restasche der unbehandelten Kohle bei 1420°C lag.

### Beispiel 2:

Ein Anteil von 60 Gew.-% der im Beispiel 1 näher beschriebenen Kohle wurde in einem Pflugschaufel-Mischer vorgelegt. Unter laufendem Mischer wurden 10 Gew.-% eines Rückstands aus einer Schwefelsäure-Produktion hinzugegeben und für 2 min. homogenisiert. Der Rückstand aus der Schwefelsäure-Produktion hatte folgende Zusammensetzung:

| | |
|---|---|
| 63 | Gew.-% Fe₂O₃, |
| 9 | Gew.-% SiO₂, |
| 7 | Gew.-% TiO₂, |
| 4 | Gew.-% Al₂O₃ |
| 3 | Gew.-% CaO und |
| 15 | Gew.-% Feuchte. |

Anschließend wurden 30 Gew.-% einer Suspension eines Rückstands aus der Herstellung von TiO₂-Pigment (Zusammensetzung wie im Beispiel 1) nach dem im Beispiel 1 beschriebenen Verfahren auf die Kohle gesprüht. Die Mischung wurde für weitere 2 min. homogenisiert und anschließend getrocknet. Die Asche dieser Mischung enthielt:

| | |
|---|---|
| 35 | Gew.-% SiO₂, |
| 17 | Gew.-% Al₂O₃, |
| 15,3 | Gew.-% TiO₂, |
| 15 | Gew.-% Fe₂O₃, |
| 4,2 | Gew.-% CaO und |
| 2,5 | Gew.-% MgO. |

Der Schmelzpunkt der Asche diser Mischung lag bei 1330°C, während die Restasche der unbehandelte Kohle einen Schmelzpunkt von 1420°C aufwies.

### Beispiel 3:

Ein Anteil von 80 Gew.-% der im Beispiel 1 näher beschriebenen Kohle wurde in einem Pflugschaufel-Mischer vorgelegt. Bei laufendem Mischer wurden 20 Gew.-% eines Rückstands aus einer Schwefelsäure-Produktion mit der im Beispiel 1 beschriebenen Zusammensetzung und einer Partikelgröße kleiner 250 µm hinzugegeben. Die Mischung wurde für 3 min. homogenisiert und anschließend getrocknet. Die Asche dieser Mischung enthielt:

| | |
|---|---|
| 38 | Gew.-% SiO₂, |
| 22 | Gew.-% Fe₂O₃, |
| 20 | Gew.-% Al₂O₃, |
| 3,5 | Gew.-% CaO, |
| 2,5 | Gew.-% MgO und |
| 2 | Gew.-% TiO₂. |

Bei dieser Mischung hatte die Asche einen Schmelzpunkt von 1370 °C, während die Restasche der unbehandelten Kohle einen Schmelzpunkt von 1420 °C aufwies.

## Patentansprüche

1. Verfahren zum Einbringen einer Pulvermischung, bestehend aus Kohle einer Korngröße von <3 mm, vorzugsweise 20 bis 500 µm und einem Restaschengehalt von 8 bis 60 Gew.% sowie 2 bis 50 Gew.% titan- und titanoxidhaltigen Rückständen einer Korngröße von 0,2 bis 1000 µm und eisen- und eisenoxidhaltigen Rückständen mit einer Korngröße 1 bis 3000 µm in ein metallurgisches Gefäß oder Ofen, wobei die Pulvermischung unmittelbar in den Reaktionsraum des Gefäßes oder Ofens eingeblasen wird.

2. Verfahren nach Anspruch 1, dadurch gekennzeichnet, daß die titanhaltigen und titanoxidhaltigen Rückstände einen Titan- bzw. Titandioxid-Gehalt von 5 bis 80 Gew.% aufweisen.

3. Verfahren nach Anspruch 1, dadurch gekennzeichnet, daß die eisenhaltigen und eisenoxidhaltigen Rückstände einen Eisen- bzw. Eisenoxid-Gehalt von 30 bis 90 Gew.% aufweisen.

4. Verfahren nach einem der Ansprüche 1 bis 3, dadurch gekennzeichnet, daß die Rückstände in Form einer Suspension auf die Kohle aufgesprüht werden.

5. Verfahren nach Anspruch 4, dadurch gekennzeichnet, daß die Suspension einen Feststoffgehalt von 500 bis 800 g/l aufweist.

6. Verfahren nach einem der Ansprüche 1 bis 3, dadurch gekennzeichnet, daß die Rückstände in Pulverform mit der Kohle gemischt werden.

7. Verfahren nach einem der Ansprüche 1 bis 5, dadurch gekennzeichnet, daß die aus der Titandioxidherstellung stammenden Rückstände einen Titandioxid-Gehalt von 5 bis 65 Gew.%, vorzugsweise 20 bis 65 Gew.% besitzen.

## Claims

1. A method for introducing a powder mixture, consisting of coal of a grain size of < 3 mm, preferably 20 to 500 µm, and a residual ash content of 8 to 60% by weight and also 2 to 50% by weight residues containing titanium and titanium oxide of a grain size of 0.2 to 1000 µm and residues containing iron and iron oxide of a grain size of 1 to 3000 µm into a metallurgical vessel or furnace, wherein the powder mixture is blown directly into the reaction chamber of the vessel or furnace.

2. A method according to Claim 1, characterised in that the residues containing titanium and titanium oxide have a titanium or titanium dioxide content of 5 to 80% by weight.

3. A method according to Claim 1, characterised in that the residues containing iron and iron oxide have an iron or iron oxide content of 30 to 90% by weight.

4. A method according to one of Claims 1 to 3, characterised in that the residues are sprayed on to the coal in the form of a suspension.

5. A method according to Claim 4, characterised in that the suspension has a solids content of 500 to 800 g/l.

6. A method according to one of Claims 1 to 3, characterised in that the residues are mixed with the coal in powder form.

7. A method according to one of Claims 1 to 5, characterised in that the residues from the production of titanium dioxide have a titanium dioxide content of 5 to 65% by weight, preferably 20 to 65% by weight.

## Revendications

1. Procédé d'introduction d'un mélange de poudres, constitué de charbon d'une granulométrie < 3 mm, de préférence de 20 à 500 µm et d'une teneur en cendre résiduelle de 8 à 60 % en poids, ainsi que de 2 à 50 % en poids de résidus renfermant du titane et de l'oxyde de titane d'une granulométrie de 0,2 à 100 µm et des résidus renfermant du fer et de l'oxyde de fer d'une granulométrie de 1 à 3000 µm, dans un récipient métallurgique ou dans un four, le mélange de poudres étant insufflé directement dans l'espace de réaction du récipient ou du four.

2. Procédé suivant la revendication 1, caractérisé en ce que les résidus renfermant du titane et les résidus renfermant de l'oxyde de titane ont une teneur en titane ou en dioxyde de titane de 50 à 80 % en poids.

3. Procédé suivant la revendication 1, caractérisé en ce que les résidus renfermant du fer et de l'oxyde de fer ont une teneur en fer ou en oxyde de fer de 30 à 90 % en poids.

4. Procédé suivant l'une des revendications 1 à 3, caractérisé en ce qu'il consiste à projeter les résidus sur le charbon sous la forme d'une suspension.

5. Procédé suivant la revendication 4, caractérisé en ce que la suspension a une teneur en matières solides de 500 à 800 g/l.

6. Procédé suivant l'une des revendications 1 à 3, caractérisé en ce qu'il consiste à mélanger les résidus sous forme de poudre au charbon.

7. Procédé suivant l'une des revendications 1 à 5, caractérisé en ce que les résidus issus de la fabrication du dioxyde de titane ont une teneur en dioxyde de titane de 5 à 65 % en poids et, de préférence, de 20 à 65 % en poids.
